# EUROPEAN PATENT SPECIFICATION

(11) **EP 0 658 445 B1**
(45) Date of publication and mention of the grant of the patent: **03.09.1997**
(21) Application number: 93310164.4
(22) Date of filing: 16.12.1993
(51) Int. Cl.: B44C 5/06, A01G 5/06

(54) **Flower presser**
Vorrichtung zum Pressen von Blumen
Dispositif pour le pressage de fleurs

(43) Date of publication of application: 21.06.1995
(73) Proprietor: Sugino, Nobuo, Yokohama-shi, Kanagawa-ken (JP)
(72) Inventor: Sugino, Nobuo, Yokohama-shi, Kanagawa-ken (JP)
(74) Representative: Godwin, Edgar James

(56) References cited:
- EP-A- 0 342 248
- EP-A- 0 487 736

## Description

The present invention relates to a flower presser for pressing, drying, and storing flowers or herbs which have been picked and collected.

It is known that a flower(s) to be stored in dryness is inserted between an urethane mat and a paper sheet and placed on a wire netting under which an amount of a dehydrating agent (namely, silica gel) is distributed, and a weight, e.g. books, is loaded over to press down the flower.

For the purpose, the urethane mat, the paper sheet, the wire netting, and the dehydrating agent all have to be available at hand and associated in a layer arrangement with generous labour.

Also, the flower inserted between the urethane mat and the paper sheet is spaced from the dehydrating agent and will be dried out after a considerable length of time. The dehydrating agent remains exposed to the ambient air during the pressing and causes the flower to be dried imperfectly, whereby the colors of the dried flower will fade promptly.

It is also known, from EP-A-0 342 248, a method for drying flowers, and a desiccating unit, which function under the effect of pressure and in humidity-controlled atmosphere.

It would be desirable to be able for elimination of the foregoing disadvantages, to provide a flower presser in which a flower(s) to be stored in dryness can easily be set in position without labouring for the layer arrangement, pressed, and dried at high efficiency within a short time so that, after being pressed and dried out, it remains intact with minimal color fading.

In one aspest the present invention provides a flower presser comprising: one, two, or more dry sheets coated or saturated with a desiccant; a holder case made of a damp-proof flexible material and having an opening in an upper end thereof, for containing the dry sheet(s) therein; and a fastener provided adjacent to the opening of the holder case so that it can close the opening to seal the holder case.

In another aspect the invention provides a flower presser in which the fastener is detachably mounted on the holder case for closing the opening.

The invention will be described further, by way of example only, with reference to the accompanying drawings, in which:
Fig. 1 is a front view of a flower presser, showing a first embodiment of the present invention;
Fig. 2 is a cross sectional view taken along the line 2-2 of Fig. 1;
Fig. 3 is an explanatory view of a holder case of the flower presser;
Fig. 4 is an explanatory view of two dry sheets of the flower presser;
Fig. 5 is an explanatory view of flowers to be pressed and dried;
Fig. 6 is an explanatory view showing the flowers arranged between two sheets of protective paper on one of the dry sheets and covered with the other dry sheet;
Fig. 7 is an explanatory view showing that the two dry sheets sandwiching the flowers are fixed to each other by pieces of adhesive tape;
Fig. 8 is an explanatory view of the two dry sheets of Fig. 7 with the flowers in between being fed into the holder case;
Fig. 9 is an explanatory view showing that the holder case containing the flowers is pressed down by a load;
Fig. 10 is an explanatory view showing the removal of the pressed and dried flowers;
Fig. 11 is an explanatory view showing the regeneration of the dry sheets in a microwave oven;
Fig. 12 is an explanatory view showing the regeneration of the dry sheet with an electric iron;
Figs. 13 to 15 are explanatory views showing a second embodiment of the present invention;
Figs. 16 to 18 are explanatory views showing a third embodiment of the present invention;
Figs. 19 to 21 are explanatory views showing a fourth embodiment of the present invention;
Figs. 22 and 23 are explanatory views showing a fifth embodiment of the present invention; and
Figs. 24 to 26 are explanatory views showing a sixth embodiment of the present invention.

### DESCRIPTION OF THE PREFERRED EMBODIMENTS

Some embodiments of the present invention will be described in detail, referring to the accompanying drawings.

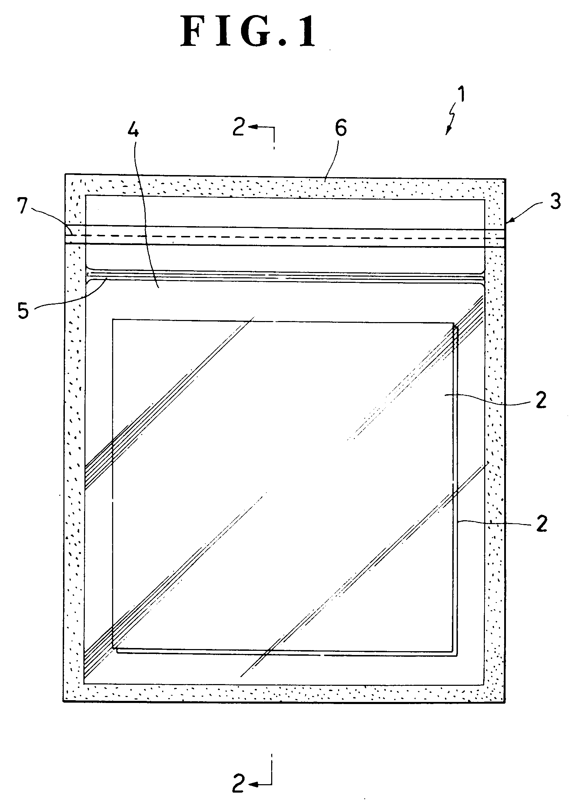

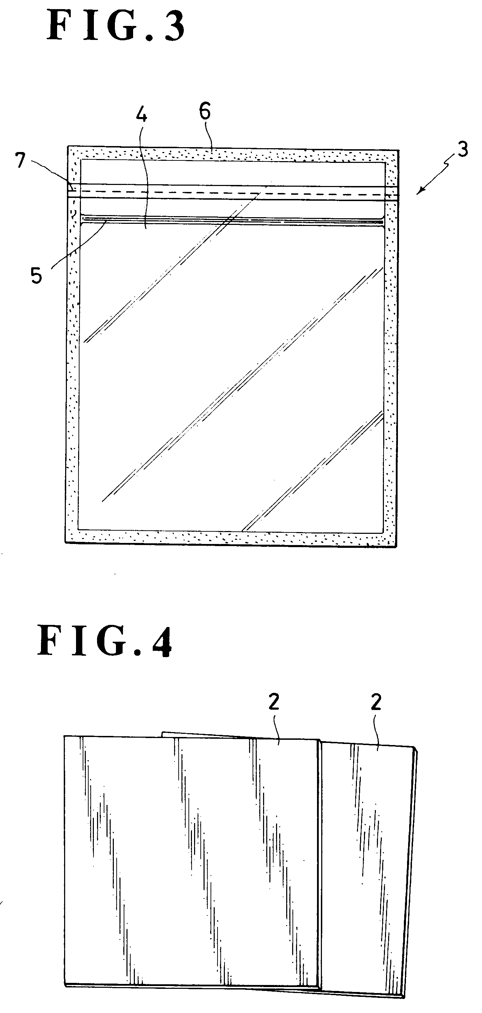

Figs. 1 to 12 illustrate a first embodiment of the present invention in which the numeral 1 represents a flower presser. The flower presser 1 comprises two or more dry sheets 2, two sheets being available in this embodiment as best shown in Fig. 4, and a holder case 3, shown separately in Fig. 3, for holding therein the two dry sheets 2.

The dry sheets 2 may be made of desiccant boards containing e.g. calcium chloride or lithium chloride, or sheets of fabric or paper saturated with a desiccant. Such desiccant boards are commonly produced by immersing a sheet of thin fabric layers or a lamination of several to tens of coarse papers in a water solution which includes 10 to 25 % by weight of calcium chloride dihydrate or lithium chloride hydrate and after drying, heating it to 80 to 90°C. Accordingly, the resultant dry sheet 2 is flexible and applicable to versatile dehydrating actions.

The fabric or paper material of the dry sheet 2 may be a nonflammable substance capable of being quickly dried in an oven for reuse.

As shown in Figs. 1 to 3, the holder case 3 is formed of a transparent or translucent damp-proof flexible material, e.g. polypropylene or KOP, and provided with a fastener 5 for opening and closing the opening 4 of the holder case 3. The holder case 3 is airtightened by heat sealing its upper end forming a heat seal 6. There is also provided a straight cutout marking 7 between the fastener 5 and the heat seal 6.

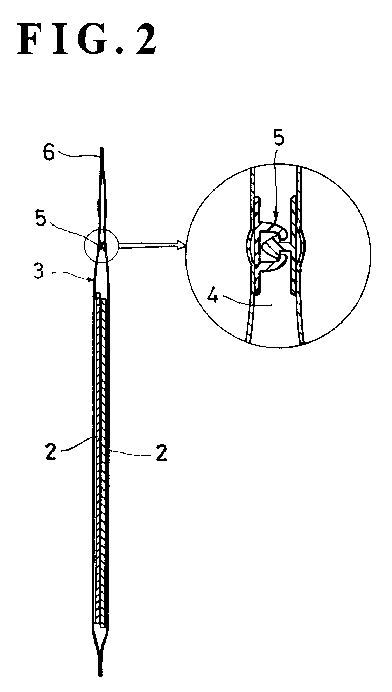

The flower presser 1 is commercially available in its merchandise form, as shown in Figs. 1 and 2, where the holder case 3 carrying the two dry sheets 2, 2 therein has been pumped out and sealed off at the heat seal 6 with the fastener 5 remaining closed tightly.

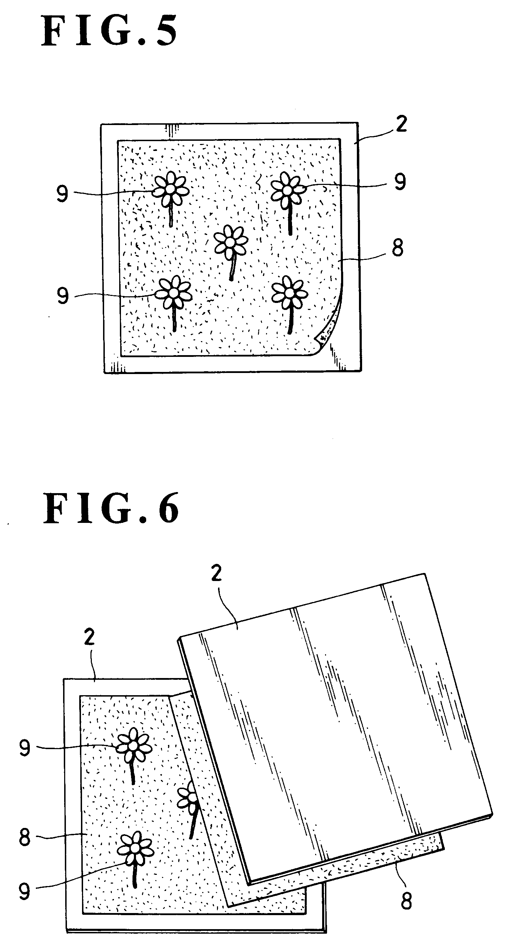

For producing one or more pressed flowers, the holder case 3 of the flower presser 1 is first cut out by a user along the cutout marking 7. Then, the fastener 5 is released to open the holder case 3. The two dry sheets 2, 2 are taken out from the holder case 3 and one of them is placed on a level surface. As best shown in Fig. 5, the dry sheet 2 placed is then covered at its surface with a soft lining 8 such as tissue or Japanese paper and an appropriate number of raw flowers 9 to be pressed and dried are arranged in place so that they never overlap each other on the dry sheet 2.

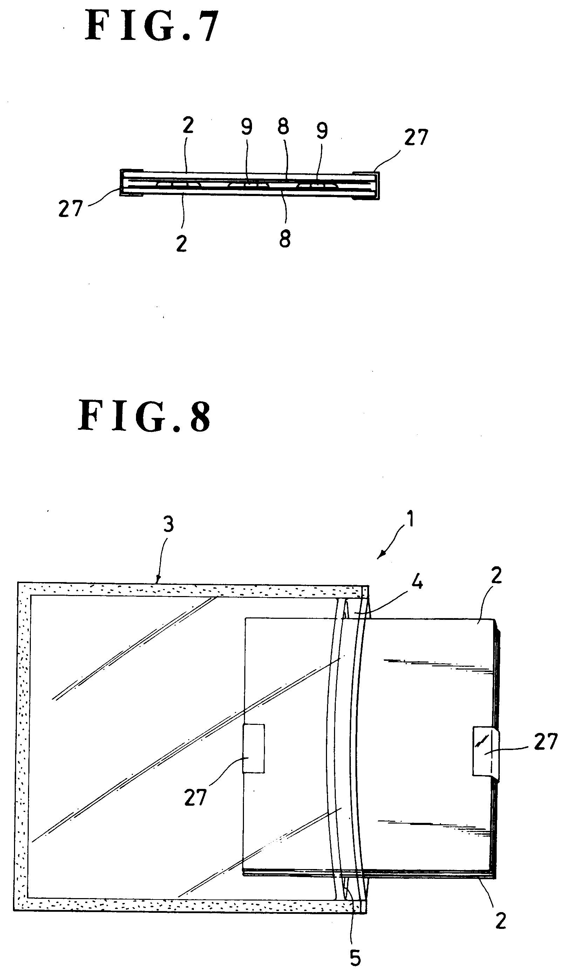

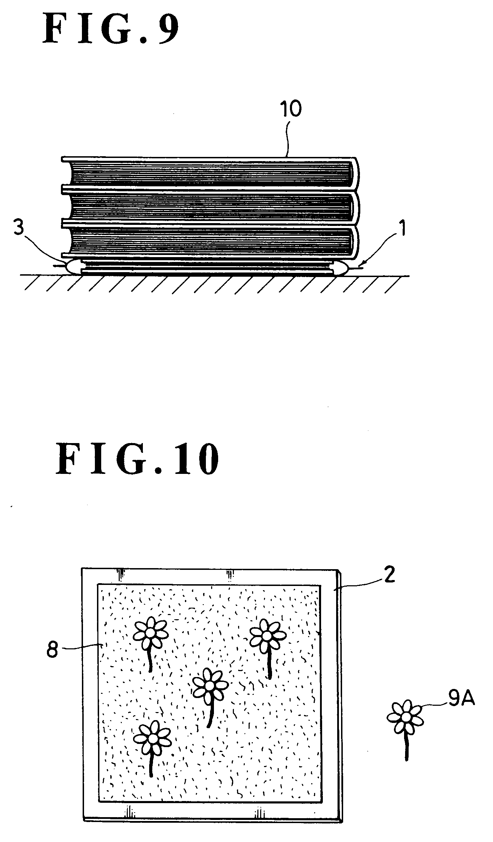

After the flowers 9 are covered entirely with another soft paper lining 8, they are loaded with the other dry sheet 2 from the upper. It is a good idea that the two dry sheets 2, 2 sandwiching the flowers 9 are tightened to each other using pieces of an adhesive tape 27, as shown in Fig. 7. The two dry sheets 2, 2 with the flowers 9 sandwiched therebetween are placed back into the holder case 3, as shown in Fig. 8. The air in the holder case 3 is removed out and the fastener 5 is closed to seal off the holder case 3. As shown in Fig. 9, the holder case 3 is pressed down under a weight 10, e.g. some thick books, and will be left for at least one or two days.

During the pressing period, the flowers 9 are being dried efficiently by the dehydrating action of the dry sheets 2, 2 regardless of a moisture of the room. As the result, the flowers 9 turn to dried flowers 9A which will last long without radically fading their colors.

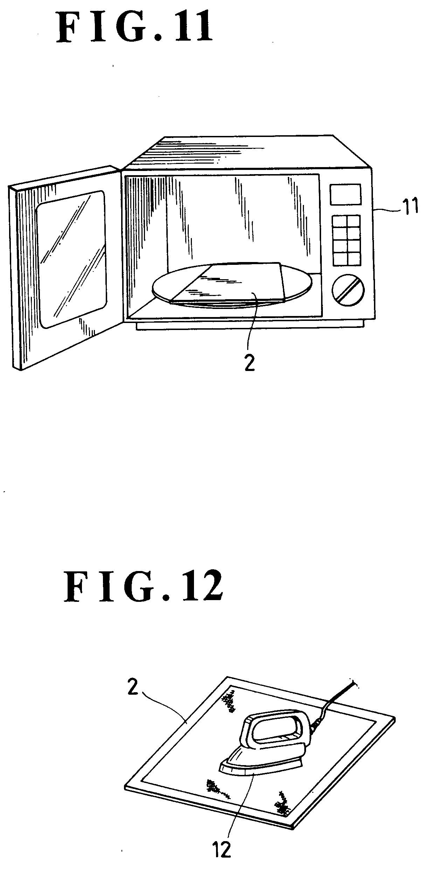

Before reuse of the flower presser 1, the dry sheets 2, 2 can be dried in a microwave oven 11 as shown in Fig. 11 or by an electric iron with the help of a protective interface as shown in Fig. 12. They may be dried or heated for reactivation of their desiccants using a futon dryer, a hair dryer, or the like.

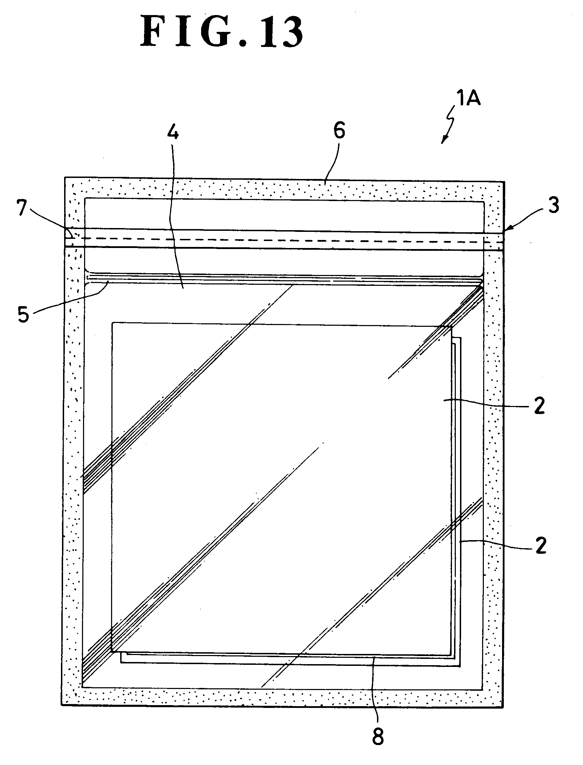

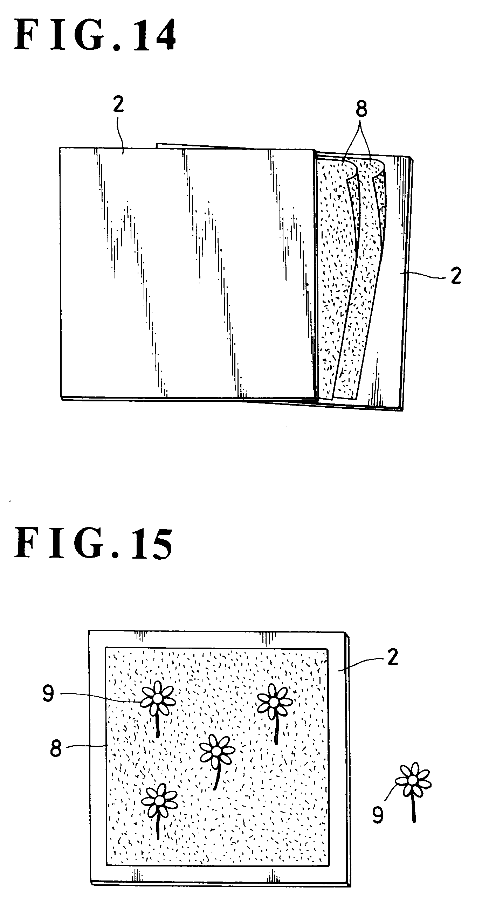

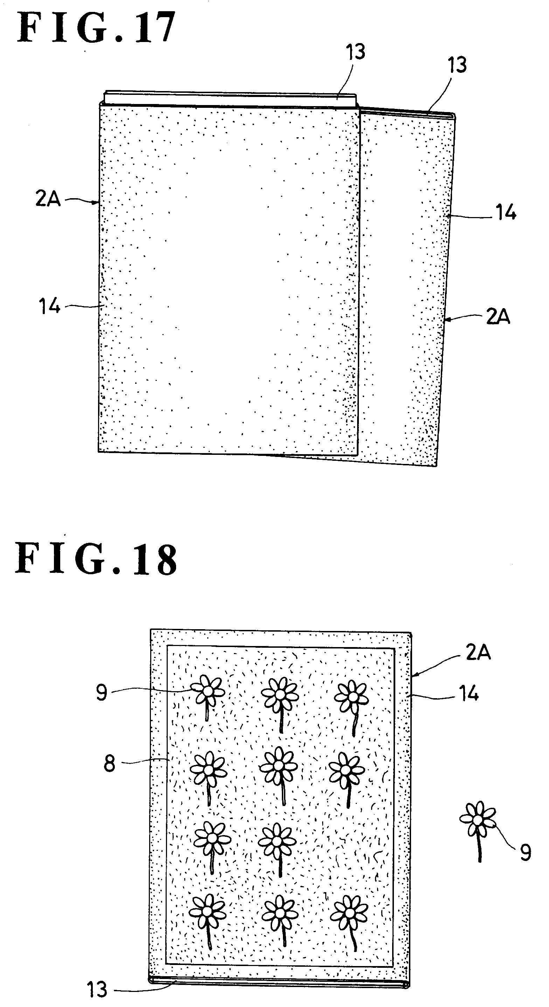

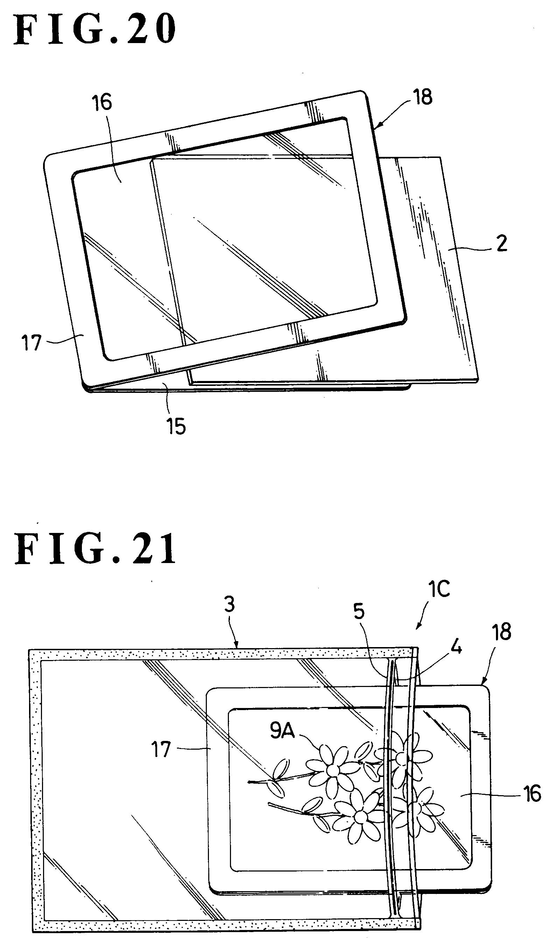

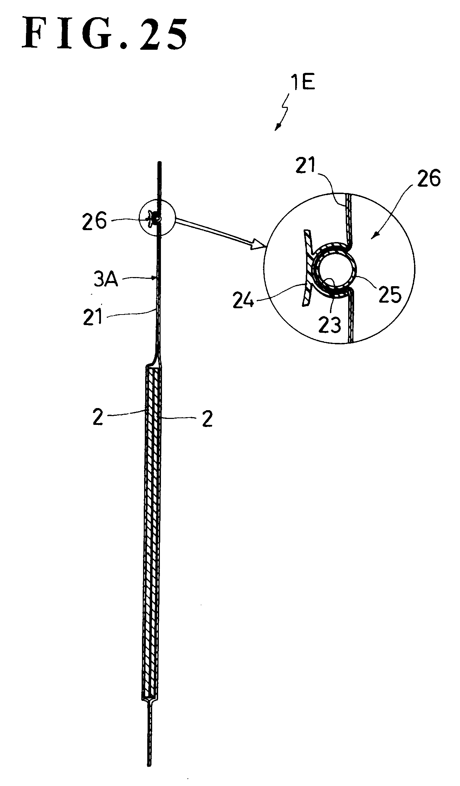

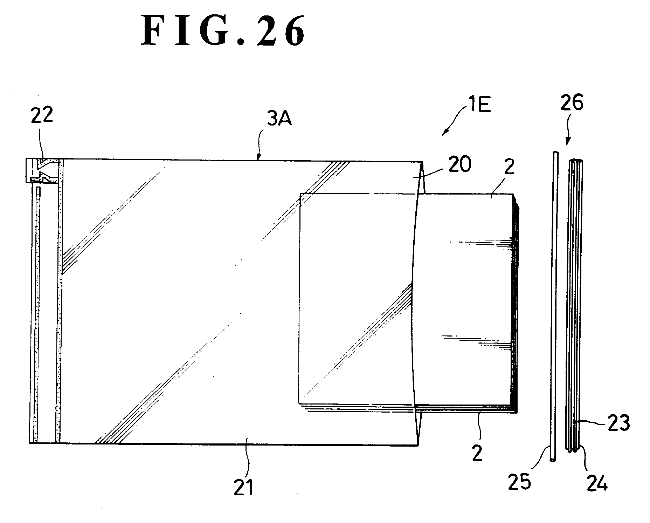

The other embodiments of the present invention will now be described referring to Figs. 13 to 26, in which like components are denoted by like numerals as those of the first embodiment and will no more be explained.

A second embodiment of the present invention illustrated in Figs. 13 to 15 differs from the first embodiment by the fact that at least two or more of the soft linings 8, 8 of Japanese paper are added to the two dry sheets 2, 2 as the members of an initial kit contained in the holder case 3. Accordingly, a flower presser 1A of the second embodiment will be utilized with equal success while no preparation of the soft linings or tissue papers is needed.

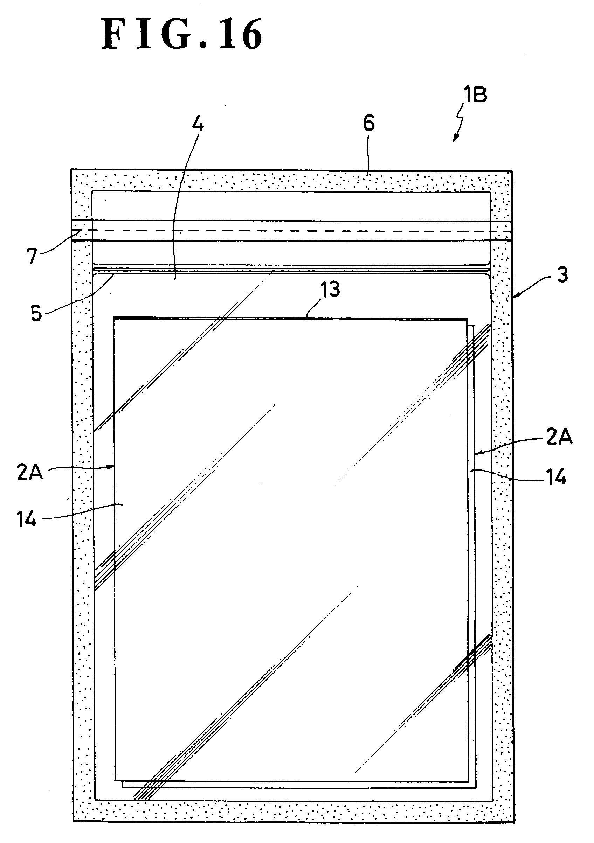

A third embodiment of the present invention illustrated in Figs. 16 to 18 differs from the first embodiment by the fact that the two dry sheets 2, 2 are replaced with two modified dry sheets 2A, 2A, each comprising a dry sheet base 13 coated or saturated with a desiccant and a cushion layer(s) 14 mounted to one or both sides of the dry sheet base 13 and made of polyurethane foam, Quino-cloth, crepe paper, felt, nonwoven material, or the like.

Accordingly, a flower presser 1B of the third embodiment employing the two modified dry sheets 2A, 2A will be utilized with equal success in which shrinkage or crimpness of the flowers 9 is minimized by the gripping effects of the dry sheets 2A, 2A.

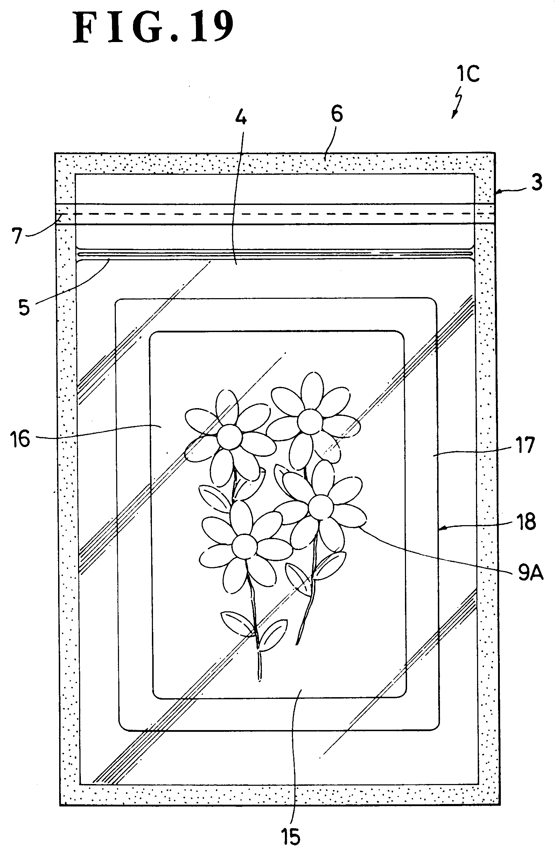

A fourth embodiment of the present invention illustrated in Figs. 19 to 21 differs from the first embodiment by the fact that the initial kit contained in the holder case 3 includes one dry sheet 2 and a cover binder 18 which comprises a support plate 15 and a frame cover 17 having a transparent sheet 16 fitted in the frame opening thereof. Accordingly, a flower presser 1C of the fourth embodiment will be utilized with equal success in which the dried flowers 9A can visibly be stored in the cover binder 18.

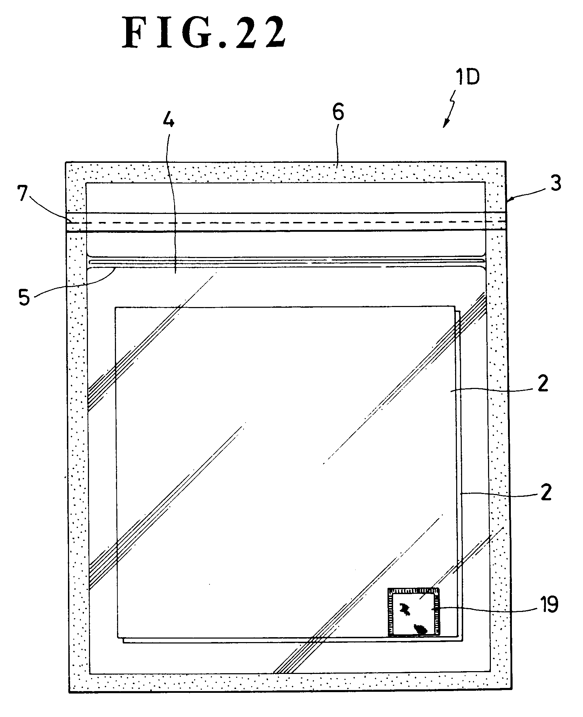

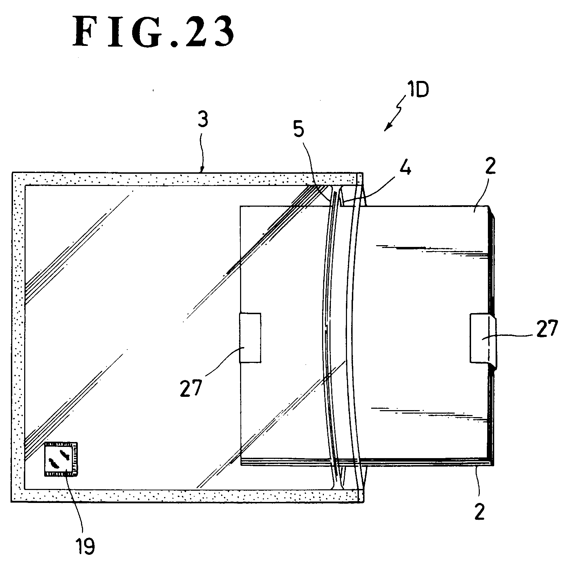

A fifth embodiment of the present invention illustrated in Figs. 22 and 23 differs from the first embodiment by the fact that a deoxidant 19 is added in the holder case 3. Accordingly, a flower presser 1D of the fifth embodiment will be utilized with equal success in which the deoxidant 19 accelerates the drying action.

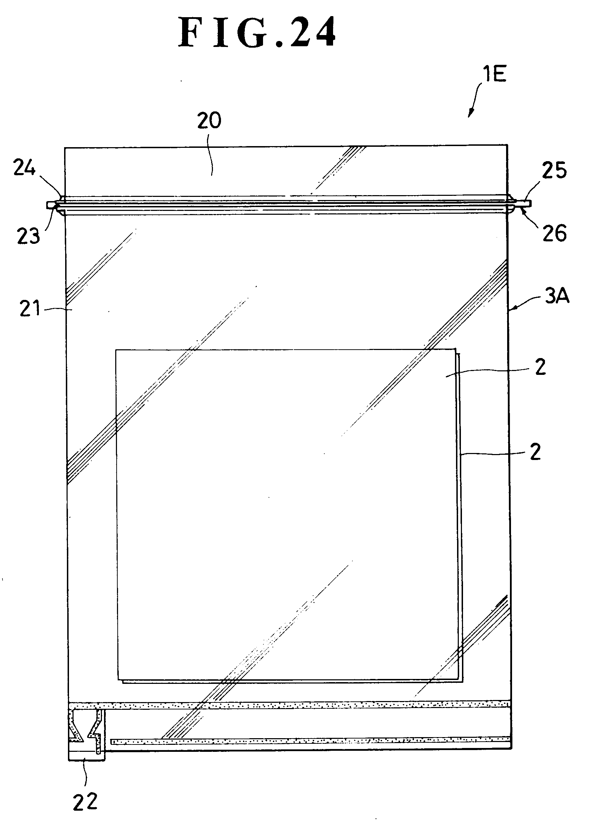

A sixth embodiment of the present invention illustrated in Figs. 24 to 26 differs from the first embodiment by the fact that the holder case 3 is replaced with a modified holder case 3A which comprises a base bag 21 made of a damp-proof flexible material having an opening 20 at one end thereof, a check valve or nozzle 22 made of a sheet material and provided at the opposite end of the base bag 21 to the opening end for removing the air from the inside of the base bag 21 or absorbing the same with the use of a vacuum cleaner before sealing a vacuum, and a fastener 26 for closing the opening 20 of the base bag 21. The linear fastener 26 comprises a support bar 24 having a C-shaped groove 23 thereof and a fixing rod 25 arranged to fit into the C-shaped groove 23 so that the base bag 21 is gripped between the support bar 24 and the fixing rod 25.

Accordingly, a flower presser 1E of the sixth embodiment employing the modified holder case 3A will be utilized with equal success in which the air in the base bag 21 can forcibly be removed by an appropriate means such as a vacuum cleaner to make a vacuum in it. As the vacuum is created in the holder case 3A, the two dry sheets 2, 2 remain pressed against each other without using any weight or load.

The check valve may separately be formed of another appropriate material and attached to the base bag 21.

As set forth above, the advantages of the present invention are as follows:
(1) The flower presser according to the invention comprises one, two, or more dry sheets coated or saturated with a desiccant and a holder case made of a damp-proof flexible material and provided with a fastener for opening and closing the opening of the holder case so that it can contain the two or more dry sheets. In use, a flower(s) to be processed is inserted between the two dry sheets and held in the holder case. After the air is removed and the fastener is closed, the holder case are loaded with a weight, e.g. some thick books. As the result, the flower in the holder case will efficiently be dried out by the desiccant of the dry sheets within a short time regardless of the room temperature and moisture and, thus, turn to a pressed flower which hardly fades in color.
(2) As apparent from the description of the paragraph (1), at least two or more of the dry sheets are contained in the holder case for drying flowers to be pressed and no addition of an urethane mat, paper sheets, a wire netting, or a dehydrating agent such as silica gel is needed.
(3) As apparent from the description of the paragraph (1), the dry sheets are reusable when having been dried with a microwave oven or electric iron and the holder case has the fastener for opening and closing. Hence, the flower presser can repeatedly be used ensuring the cost saving.
(4) As apparent from the description of the paragraph (1), the holder case containing the flower(s) is seated under a most available weight, e.g. some thick books, during the pressing and drying action and will remain neat and in good order.

## Claims

1. A flower presser comprising:
at least one dry sheet (2;2A) coated or impregnated with a desiccant; characterised by:
a holder case (3;3A) for containing the dry sheet(s) (2;2A), the holder case being made of a damp-proof flexible material and having an end which is openable to provide an opening for passage of the dry sheet(s) therethrough; and
a fastener (5;26) for closing the opening to seal the holder case (3;3A).

2. A flower presser as claimed in claim 1, wherein the dry sheet (2;2A) comprises one or more sheets of paper or non-flammable fabric coated or impregnated with the desiccant.

3. A flower presser as claimed in claim 1, wherein the dry sheet (2A) comprises a base (13) coated or impregnated with the desiccant and a cushion layer (14) attached to and substantially covering at least one side of the base (13).

4. A flower presser as claimed in any preceding claim, including a cover binder (18) for holding the dry sheet (2) so that a flower or flowers (9A) pressed and dried on the dry sheet (2) can visibly be stored.

5. A flower presser as claimed in any preceding claim, wherein the holder case (3;3A) is made of a transparent or translucent material, at least on one side.

6. A flower presser as claimed in any preceding claim, wherein the holder case (3) contains a deoxidant (19).

7. A flower presser as claimed in any preceding claim, in which the fastener (26) is detachably mountable on the holder case (3A).

8. A flower presser as claimed in any preceding claim, wherein the holder case (3A) is provided with a check valve (22) for allowing discharge of air from the holder case and restricting entrance of air into the same.

9. A flower presser as claimed in any preceding claim, wherein the holder case (3A) is provided with a nozzle (22) through which air in the holder case is removable by suction.

10. A flower presser as claimed in any preceding claim, including two or more dry sheets (3;3A).

## Patentansprüche

1. Vorrichtung zum Pressen von Blumen, die
wenigstens einen trockenen Bogen (2; 2A) aufweist, der mit einem Trocknungsmittel beschichtet oder imprägniert ist; gekennzeichnet durch:
einen Einsteckkasten (3; 3A) zur Aufnahme des (der) trockenen Bogens (Bögen) (2; 2A), wobei der Einsteckkasten aus einem feuchtigkeitsbeständigen flexiblen Material besteht und eine Stirnseite hat, die geöffnet werden kann, um eine Öffnung zum Hindurchführen des (der) trockenen Bogens (Bögen) durch diese zu schaffen; und
einen Verschluß (5; 26) zum Schließen der Öffnung, um den Einsteckkasten (3; 3A) abzudichten.

2. Vorrichtung zum Pressen von Blumen nach Anspruch 1, bei welcher der trockene Bogen (2; 2A) einen oder mehrere Bögen Papier oder eines nicht entflammbaren Gewebes umfaßt, die mit dem Trocknungsmittel beschichtet oder imprägniert sind.

3. Vorrichtung zum Pressen von Blumen nach Anspruch 1, bei welcher der trockene Bogen (2A) eine Unterlage (13), die mit dem Trocknungsmittel beschichtet oder imprägniert ist, und eine dämpfende Auflage (14) umfaßt, die auf wenigstens einer Seite der Unterlage (13) angebracht ist und diese im wesentlichen bedeckt.

4. Vorrichtung zum Pressen von Blumen nach einem der vorhergehenden Ansprüche, die einen Abdeckeinband (18) zum Halten des trockenen Bogens (2) einschließt, so daß eine Blume oder Blumen (9A), die auf dem trockenen Bogen (2) gepreßt und getrocknet werden, sichtbar aufbewahrt werden können.

5. Vorrichtung zum Pressen von Blumen nach einem der vorhergehenden Ansprüche, bei welcher der Einsteckkasten (3; 3A) zumindest auf einer Seite aus einem durchsichtigen oder durchscheinenden Material hergestellt wird.

6. Vorrichtung zum Pressen von Blumen nach einem der vorhergehenden Ansprüche, bei welcher der Einsteckkasten (3) ein Desoxydationsmittel (19) enthält.

7. Vorrichtung zum Pressen von Blumen nach einem der vorhergehenden Ansprüche, bei welcher der Verschluß (26) abnehmbar am Einsteckkasten (3A) angebracht ist.

8. Vorrichtung zum Pressen von Blumen nach einem der vorhergehenden Ansprüche, bei welcher der Einsteckkasten (3A) mit einem Rückschlagventil (22) versehen ist, um die Ableitung von Luft aus dem Einsteckkasten zu ermöglichen und den Eintritt von Luft in denselben zu beschränken.

9. Vorrichtung zum Pressen von Blumen nach einem der vorhergehenden Ansprüche, bei welcher der Einsteckkasten (3A) mit einem Mundstück (22) versehen ist, durch das die Luft im Einsteckkasten durch Absaugen entfernt werden kann.

10. Vorrichtung zum Pressen von Blumen nach einem der vorhergehenden Ansprüche, die zwei oder mehr trockene Bögen (3; 3A) einschließt.

## Revendications

1. Presseur de fleurs comprenant:
au moins une feuille sèche (2; 2A) revêtue ou imprégnée d'un dessiccant; caractérisé par:
un boîtier de maintien (3; 3A) pour contenir la/les feuille/s sèche/s (2; 2A), le boîtier de maintien étant fait d'un matériau flexible anti-humidité et étant pourvu d'une extrémité qui peut être ouverte pour fournir une ouverture pour le passage de la/des feuille/s sèche/s; et
une attache (5; 26) pour fermer l'ouverture afin de fermer hermétiquement le boîtier de maintien (3; 3A).

2. Presseur de fleurs selon la revendication 1, dans lequel la feuille sèche (2; 2A) comprend une ou plusieurs feuille/s de papier ou de tissu non inflammable revêtu ou imprégné du dessiccant.

3. Presseur de fleurs selon la revendication 1, dans lequel la feuille sèche (2A) comprend une base (13) revêtue ou imprégnée du dessiccant et une couche de coussin (14) fixée à la base (13) et en couvrant essentiellement au moins un côté de celle-ci.

4. Presseur de fleurs selon l'une quelconque des revendications précédentes, incluant un élément de liaison et de couverture (18) pour maintenir la feuille sèche (2) de manière à ce qu'une fleur ou des fleurs (9A) pressée/s et séchée/s sur la feuille sèche (2) puisse/nt être conservée/s de manière visible.

5. Presseur de fleurs selon l'une quelconque des revendications précédentes, dans lequel le boîtier de maintien (3; 3A) est fait d'un matériau transparent ou translucide, au moins sur un côté.

6. Presseur de fleurs selon l'une quelconque des revendications précédentes, dans lequel le boîtier de maintien (3) contient un désoxydant (19).

7. Presseur de fleurs selon l'une quelconque des revendications précédentes, dans lequel l'attache (26) peut être montée de manière détachable sur le boîtier de maintien (3A).

8. Presseur de fleurs selon l'une quelconque des revendications précédentes, dans lequel le boîtier de maintien (3A) est pourvu d'une valve de contrôle (22) pour permettre l'évacuation de l'air du boîtier de maintien et restreindre l'entrée d'air dans ce même boîtier.

9. Presseur de fleurs selon l'une quelconque des revendications précédentes, dans lequel le boîtier de maintien (3A) est pourvu d'une buse (22) à travers laquelle l'air se trouvant dans le boîtier de maintien peut être retiré par aspiration.

10. Presseur de fleurs selon l'une quelconque des revendications précédentes, incluant une ou plusieurs feuilles sèches (3; 3A).
